# EUROPEAN PATENT APPLICATION

(11) **EP 4 394 914 A1**
(43) Date of publication of application: **03.07.2024**
(21) Application number: 23866598.8
(22) Date of filing: 28.08.2023
(51) Int. Cl.: H01M 4/04, B30B 3/00, B30B 3/04

(54) **ELECTRODE ROLLING DEVICE**

(30) Priority: 05.10.2022 KR 20220126836
(71) Applicant: LG ENERGY SOLUTION, LTD., Seoul 07335 (KR)
(72) Inventor: KIM, Yong Dae, Daejeon 34122 (KR)
(74) Representative: Plasseraud IP
(86) International application number: PCT/KR2023/012730
(87) International publication number: WO 2024/075984

(57) **Abstract**

The present invention relates to an electrode rolling apparatus for applying pressure to a non-coated portion of an electrode.

## Description

### [Technical Field]

The present application claims the benefit and priority to Korean Patent Application No. 10-2022-0126836, filed October 5, 2022, and incorporates by reference all of the disclosures of that Korean patent application as part of this specification.

The present invention relates to an electrode rolling apparatus, and more particularly to an electrode rolling apparatus for applying pressure to a non-coated portion of an electrode.

### [Related Art]

Secondary batteries are not only used as an energy source for mobile devices, but also as a power source for electric vehicles (EVs) and hybrid electric vehicles (HEVs), and are increasingly being used as a backup power source for grid-connected electricity.

The manufacturing process of these secondary batteries is roughly divided into three stages: electrode process, assembly process, and formation process. The electrode process is further divided into active material mixing process, electrode coating process, rolling process, slitting process, winding process, etc.

Among them, the rolling process is a process in which the electrode sheet after the coating process of the electrode active material is reduced in thickness to increase the capacity density and increase the adhesion and compactness between the electrode collector and the electrode active material contained in the electrode active material, and the electrode sheet is compressed to the desired thickness and density by passing it between two rolling rollers heated to a high temperature.

In such a rolling process, the thickness of the electrode sheet is determined by the rolling gap between the two rolling rollers. In such case, the rolling gap is calculated by manipulating a drive portion that controls the up and down positions of the rolling rollers to compress and roll the electrode to the desired thickness, wherein the rolling roller of one of the two rolling rollers is generally fixed, and the electrode is compressed and rolled based on the rolling gap calculated by adjusting the position of the other rolling roller with the drive portion.

However, when the electrode sheet is rolled by a rolling roller, little pressure is applied to the non-coated portion of the electrode sheet compared to the coated portion, which is the area where the electrode active material is coated, resulting in swell or wrinkles in the non-coated portion due to the difference in the expansion rate between the coated and non-coated portions.

These swell and wrinkles lead to meandering and severe dimensional degradation of the fabric in the winding process, which is performed after the rolling process, and consequently to poor quality electrodes for secondary batteries.

Therefore, an additional process of rolling the non-coated portion after rolling the electrode sheet is required.

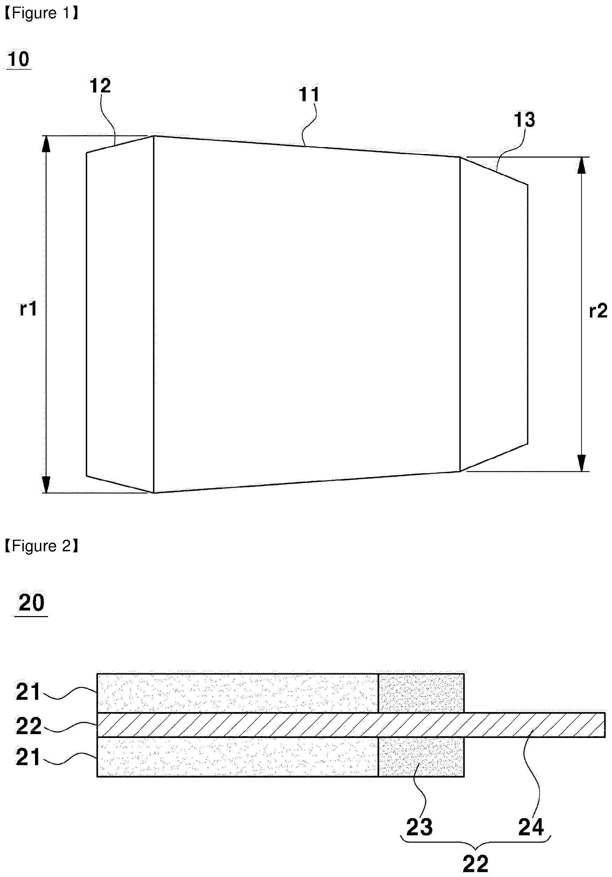

FIG. 1 is a cross-sectional view illustrating a related-art electrode rolling apparatus for rolling a non-coated portion. The related-art electrode rolling apparatus includes a rolling roll 10, which includes a center portion 11, a first end portion 12, and a second end portion 13. Here, the electrode rolling apparatus has an outer surface of the center portion 11 extending from the first end portion 12 to the second end portion 13, and a first outer diameter (r1) of the center portion 11 connected with the first end portion 12 is larger than a second outer diameter (r2) of the center portion 11 connected with the second end portion 13. With reference to FIG. 2, the non-coated portion 22 of the electrode 20 includes an insulating coating portion 23 and a non-insulating coating portion 24, and the first end portion 12 is located adjacent to a boundary between the insulating coating portion 23 and the non-insulating coating portion 24 of the electrode 20, and pressure is applied to the insulating coating portion 23 and the non-insulating coating portion 24. Since the first outer diameter r1 is larger than the second outer diameter r2, pressure can be applied uniformly even if there is a difference in the thickness of the insulating coating portion 23 and the non-insulating coating portion 24, thereby reducing the variance in the expansion rate.

However, the related art electrode rolling apparatus can roll the non-coated portion 22 of the electrode 20 only with the first end portion 12 having a larger outer diameter, and the second end portion 13 cannot be used for rolling the non-coated portion 22. Therefore, when the rolling roll 10 is replaced due to wear of the first end portion 12, the second end portion 13 must also be discarded. As a result, there is a costly economic problem for rolling the non-coated portion 22, and efforts are needed to improve the situation.

### [Related art]

### [Patent Literature]

Korean Laid-Open Patent No. 10-2019-0059210
Korean Laid-Open Patent No. 10-2022-0067239

### [Detailed Description of the Invention]

### [Technical Problem]

The present invention aims to provide an electrode rolling apparatus in which both a first rolling roller and a second rolling roller can be used for rolling a non-coated portion.

### [Technical Solution]

To achieve the above objectives,
the present invention provides an electrode rolling apparatus for applying pressure to a non-coated portion of an electrode comprising a coated portion coated with an electrode active material and a non-coated portion not coated with an electrode active material, the non-coated portion comprising an insulating coating portion and a non-insulating coating portion, the electrode rolling apparatus comprising: a first rolling roller; and a second rolling roller, wherein the first rolling roller includes a first center portion and a first end portion located at one end of the first center portion in a longitudinal direction, wherein the second rolling roller includes a second center portion and a second end portion located at one end of the second center portion in a longitudinal direction, wherein other end surface of the first center portion and other end surface of the second center portion are in contact with each other, wherein a first-first outer diameter of the first center portion connected to the first end portion is different from a first-second outer diameter of the first center portion abutting the other end surface of the second center portion, wherein a second-first outer diameter of the second center portion connected to the second end portion is different from a second-second outer diameter of the second center portion abutting the other end surface of the first center portion, and wherein the first-second outer diameter and second-second outer diameter are the same, and wherein the first end portion or second end portion is adjacent to a boundary of the insulating coating portion and the non-insulating coating portion.

The first-first outer diameter may be smaller than the first-second outer diameter and the second-first outer diameter may be smaller than the second-second outer diameter, or wherein the first-first outer diameter may be larger than the first-second outer diameter and the second-first outer diameter may be larger than the second-second outer diameter.

A length of the first center portion and the a length of the second center portion may be the same or different from each other.

The length of the first center portion and the length of the second center portion may be the same, and the first-first outer diameter and the second-first outer diameter may be the same.

The length of the first center portion and the length of the second center portion may be different from each other, and the first-first outer diameter and the second-first outer diameter may be the same or different from each other.

The length ratio of the first center portion and the second center portion may be from 3:5 to 5:3.

The first-second outer diameter with respect to the first-first outer diameter may be 0.8 to 0.99 times or 1.01 to 1.2 times, and the second-second outer diameter with respect to the second-first outer diameter is 0.8 to 0.99 times may be 1.01 to 1.2 times

The first end portion may be tapered in shape with a gradually decreasing outer diameter from the first center portion toward an end thereof, and the second end portion may be tapered in shape with a gradually decreasing outer diameter from the second center portion toward an end thereof.

Each of tapered surfaces of the first end portion and the second end portion may include a curved tapered surface and a linear tapered surface extending from the curved tapered surface.

The first end portion and the second end portion may have same or different taper angles.

The taper angles of the first end portion and the second end portion may be from 20 to 30 degrees.

The first rolling roller and the second rolling roller may be made of the same or different materials, the materials being metals or polymers.

The insulating coating portion may comprise at least one type selected from a group consisting of an insulating polymer material and an insulating ceramic material.

The first rolling roller or the second rolling roller may be made of metal, and the insulating coating portion may comprise an insulating polymer material.

A material of the first rolling roller or second rolling roller may be a polymer, and the insulating coating portion may comprise an insulating ceramic material.

An outer peripheral surface of at least one of the first center portion, the first end portion, the second center portion, and the second end portion may be formed with alternating grooves and protrusions for forming a plurality of corrugations in the non-coated portion thereof, parallel to each other from the coated portion toward an end of the non-coated portion.

Each of the grooves and protrusions may have a triangle-like shape or a semicircle-like shape in cross-section.

### [Advantageous Effects]

In the electrode rolling apparatus of the present invention, not only the first rolling roller but also the second rolling roller can be used to roll the non-coated portion of the electrode. Specifically, even if the first rolling roller is worn out due to constant rolling of the non-coated portion, the second rolling roller can be used to roll the non-coated portion, which can be economically effective because there is no wasted configuration.

Furthermore, the material of the first rolling roller and the second rolling roller, the ratio of the first outer diameter to the second outer diameter, the ratio of the second outer diameter to the first outer diameter, or the ratio of the length of the first center portion and the second center portion can be easily changed according to the material of the insulating coating portion, the widthwise length of the non-coated portion, and the like, so that various types of electrodes can be manufactured.

### [Brief Description of Drawings]

FIG. 1 is a cross-sectional view of a related-art electrode rolling apparatus.
FIG. 2 is a cross-sectional view of an electrode.
FIGS. 3 to 6 are cross-sectional views illustrating an electrode rolling apparatus used for the non-coated portion of an electrode, according to one embodiment of the present invention.

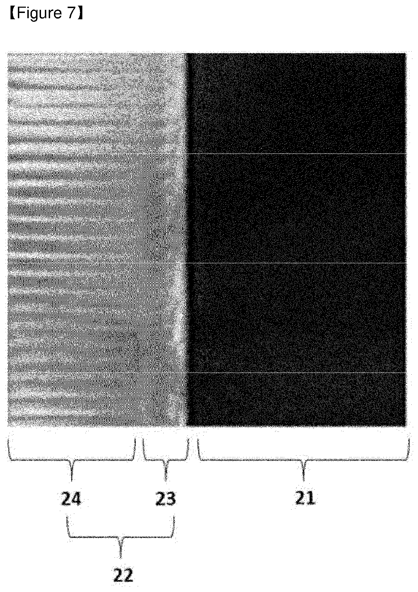

FIG. 7 is a photograph of an electrode in which a non-coated portion has been rolled using an electrode rolling apparatus according to one embodiment of the present invention.

### [Best Mode for Practicing the Invention]

The present invention is hereinafter described in detail, with reference to the accompanying drawings, so as to facilitate the practice of one having ordinary skill in the art to which the present invention belongs. However, the present invention may be implemented in many different forms and is not limited to the embodiments described herein.

In order to clearly illustrate the present invention, parts not pertinent to the description have been omitted, and identical or similar components are designated by the same reference numerals throughout the specification.

Furthermore, the terms and words used in this specification and the claims of the patent are not to be construed in their ordinary or dictionary sense, but are to be construed with a meaning and concept consistent with the technical idea of the present invention, based on the principle that the inventor may properly define the concept of a term to best describe his invention.

FIG. 2 is a side cross-sectional view of an electrode 20 to be rolled by an electrode rolling apparatus 100 of the present invention.

Referring to FIG. 2, the electrode 20 includes a coated portion 21 having an electrode active material applied to a surface of each of two sides of a square plate-shaped collector. The portion which is not coated with the electrode active material is a non-coated portion 22, and the non-coated portion 22 may be the collector. At the boundary of the non-coated portion 22 and the coated portion 21, an insulating coating portion 23 is provided. Specifically, the insulating coating portion 23 may be positioned such that a top or bottom surface thereof abuts the non-coated portion 22 and a side surface thereof abuts the coated portion 21. The portion where the insulating coating portion 23 is not formed on the non-coated portion 22 is the non-insulating coating portion 24, and the non-coated portion 22 may comprise the insulating coating portion 23 and the non-insulating coating portion 24. Thus, the non-insulating coating portion 24 may be a collector.

Furthermore, as shown in FIG. 2, in this embodiment, the height of the insulating coating portion 23 when bonded to the surface of the coated portion 21 may be configured to be equal to or slightly lower than the height of the coated portion 21.

The present invention is directed to an electrode rolling apparatus for applying pressure to a non-coated portion 22 of an electrode 20 including a coated portion 21 coated with an electrode active material and a non-coated portion 22 not coated with an electrode active material, the non-coated portion 22 including an insulating coating portion 23 and a non-insulating coating portion 24, wherein the electrode rolling apparatus 100 includes a first rolling roller 110; and a second rolling roller 120, wherein the first rolling roller 110 includes a first center portion 111 and a first end portion 112 located at one end of the first center portion in a longitudinal direction, wherein the second rolling roller 120 includes a second center portion 121 and a second end portion 122 located at one end of the second center portion in a longitudinal direction, wherein other end surface of the first center portion 111 and other end surface of the second center portion 121 are in contact with each other, wherein a first-first outer diameter (r1 - 1) of the first center portion 111 connected with the first end portion 112 differs from a first-second outer diameter (r1-2) of the first center portion 111 abutting the other end of the second center portion 121, wherein a second-first outer diameter (r2-1) of the second center portion 121 connected with the second end portion 122 differs from a second-second outer diameter (r2-2) of the second center portion 121 facing the other end of the first center portion 111, wherein the first-second outer diameter (r1-2) and the second-second outer diameter (r2-2) are the same, and wherein the first end portion 112 or the second end portion 122 is adjacent to a boundary between the insulating coating portion 23 and a non-insulating coating portion 24.

The first rolling roller 110 may include a first center portion 111 and a first end portion 112 located at one end of the first center portion 111, and the first center portion 111 and the first end portion 112 may be integral, that is, the first end portion 112 may extend from the first end portion of the first center portion 111. In one example, the first rolling roller 110 may have the first end portion 112 machined in a further process relative to the first center portion 111. Alternatively, and without limitation, the first center portion 111 and the first end portion 112 may be manufactured separately, and the first center portion 111 and the first end portion 112 may be joined together in a further process, and the first rolling roller 110 may be manufactured in various ways.

The second rolling roller 120 may include a second center portion 121 and a second end portion 122 located at one end of the second center portion 121, and the second center portion 121 and the second end portion 122 may be integral, that is, the second end portion 122 may extend from the first end portion of the second center portion 121. In one example, the second rolling roller 120 may have the second end portion 122 machined in a further process relative to the second center portion 121. Alternatively, and without limitation, the second center portion 121 and the second end portion 122 may be manufactured separately, and the second center portion 121 and the second end portion 122 may be joined together in a further process, and the second rolling roller 120 may be manufactured in a variety of ways.

Furthermore, the other end surface of the first center portion 111 and the other end surface of the second center portion 121 may be in contact with each other. Therefore, the first rolling roller 110 and the second rolling roller 120 may be integral, and the first-second outer diameter (r1-2) of the first center portion and the second-second outer diameter (r2-2) of the second center portion may be the same.

The electrode rolling apparatus 100 of the present invention has a very economical effect because both the first rolling roller 110 and the second rolling roller 120 can be used for rolling the non-coated portion 22 of the electrode 20.

In the present invention, the meaning that the first rolling roller 110 and the second rolling roller 120 can roll the non-coated portion 22 of the electrode 20 is not that the first rolling roller 110 and the second rolling roller 120 roll the non-coated portion 22 of the electrode 20 at the same time, but is meant that the first rolling roller 110 and the second rolling roller 120 each roll the non-coated portion 22 of the electrode 20. More specifically, the first rolling roller 110 can be used to roll the non-coated portion 22 of the electrode 20 first so that, when the first rolling roller 110 becomes unusable due to wear or the like, the second rolling roller 120 can be used to roll the non-coated portion 22 of the electrode 20. Alternatively, by manufacturing the first rolling roller 110 and the second rolling roller 120 with different shapes and materials, the non-coated portion 22 can be rolled to a level equivalent to the coated portion 21 by selecting the first rolling roller 110 or the second rolling roller 120 suitable for the shape and material of the electrode 20.

An outer surface of the first center portion 111 may be one extending from the first end portion 112 to the second center portion 121, and an outer surface of the second center portion 121 may be one extending from the second end portion 122 to the first center portion 111.

The first-first outer diameter (r1-1) may be smaller than the first-second outer diameter (r1-2) whereas the second-first outer diameter (r2-1) may be smaller than the second-second outer diameter (r2-2). Alternatively, the first-first outer diameter (r1-1) may be larger than the first-second outer diameter (r1-2) whereas the second-first outer diameter (r2-1) may be larger than the second-second outer diameter (r2-2).

Further, the first-second outer diameter (r1-2) with respect to the first-first outer diameter (r1-1) to may be 0.8 to 0.99 times or 1.01 to 1.2 times whereas the second-second outer diameter (r2-2) with respect to the second-first outer diameter (r2-1) to may be 0.8 to 0.99 times or 1.01 to 1.2 times.

The length L1 of the first center portion and the length L2 of the second center portion may be the same or different from each other. Preferably, the ratio of the length L1 of the first center portion to the length L2 of the second center portion may be 3:5 to 5:3, more preferably 3:4 to 4:3.

The length (L1) of the first center portion and the length (L2) of the second center portion may be the same, in which case the first-first outer diameter (r1-1) and the second-first outer diameter (r2-1) may be the same or different from each other.

The length (L1) of the first center portion and the length (L2) of the second center portion may be different from each other, in which case the first-first outer diameter (r1-1) and the second-second outer diameter (r2-2) may be the same or different from each other.

The first end portion 112 may be tapered in shape with a gradually decreasing outer diameter from the first center portion 111 toward the end whereas the second end portion 122 may be tapered in shape with a gradually decreasing outer diameter from the second center portion 121 toward the end.

Furthermore, the tapered surfaces of the first end portion 112 and the second end portion 122 may include a curved tapered surface R and a linear tapered surface L extending from the curved tapered surface R. If the tapered surface is formed only with a linear tapered surface L, a break may occur when rolling the non-coated portion 22 of the electrode 20. Therefore, by curving the tapered surface to constitute a curved tapered surface R, the non-coated portion 22 can be rolled without damaging the electrode 20.

Accordingly, the first end portion 112 and second end portion 122 may have a tapered angle, and the tapered angle of the first end portion 112 and the tapered angle of the second end portion 122 may be the same or different from each other. In one embodiment, the taper angle of the first end portion 112 and the taper angle of the second end portion 122 may be 20 to 30 degrees.

The electrode rolling apparatus 100 according to the present invention can roll the non-coated portion 22 of the electrode 20 with the first rolling roller 110 or the second rolling roller 120, so that the first end portion 112 or the second end portion 122 can be adjacent to the boundary of the coated portion 21 and the non-coated portion 22. Preferably, it may be adjacent to the boundary of the insulating coating portion 23 and the non-insulating coating portion 24.

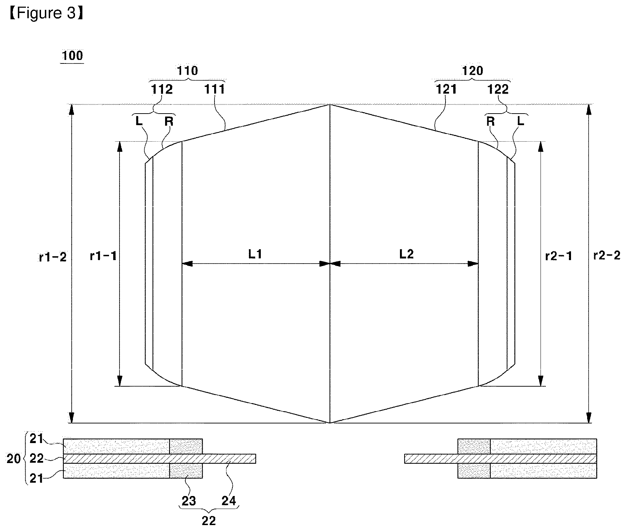

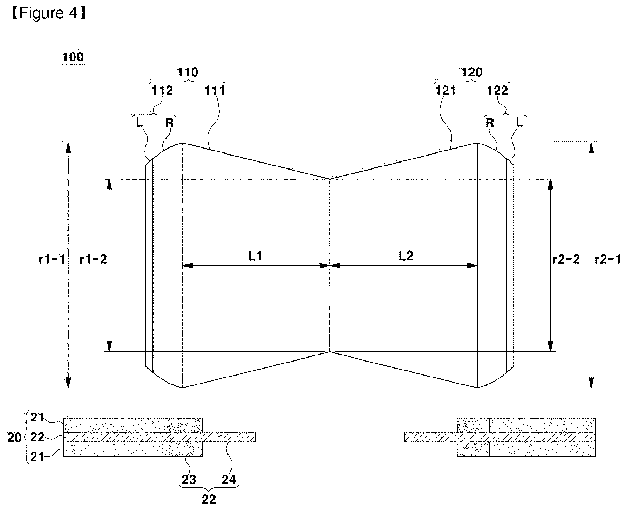

FIGS. 3 and 4 illustrate an electrode rolling apparatus 100 according to one embodiment of the present invention.

Referring to FIG. 3, the first-first outer diameter (r1-1) may be smaller than the first-second outer diameter (r1-2), and the second-first outer diameter (r2-1) may be smaller than the second-second outer diameter (r2-2). Further, the length (L1) of the first center portion may be the same as the length (L2) of the second center portion, and the first-first outer diameter (r1 -1) and the second-first outer diameter (r2-1) may be the same as each other.

Referring to FIG. 4, the first-first outer diameter (r1-1) may be larger than the first-second outer diameter (r1-2), and the second-first outer diameter (r2-1) may be larger than the second-second outer diameter (r2-2). Further, the length (L1) of the first center portion may be the same as the length (L2) of the second center portion, and the first-first outer diameter (r1 -1) and the second-first outer diameter (r2-1) may be the same as each other.

That is, the electrode rolling apparatus 100 shown in FIGS. 3 and 4 may have a configuration in which the first rolling roller 110 and the second rolling roller 120 are symmetrical.

The coated portion 21 of the electrode 20 may have the same or different widths of an electrode active material coated on the top surface (tab) and the bottom surface. Accordingly, the widths of the top surface and the bottom surface of the non-coated portion 22 formed accordingly may be the same or different.

The electrode rolling apparatus 100 shown in FIGS. 3 and 4 according to one embodiment of the present invention may have a symmetrical shape of the first rolling roller 110 and the second rolling roller 120, so that it can preferably be used for rolling electrodes having the same width on the upper and lower surfaces of the non-coated portion 22. In other words, in the electrode rolling apparatus 100 shown in FIGS. 3 and 4, both the first rolling roller 110 and the second rolling roller 120 can be used for rolling the non-coated portion 22 of the electrode 20, and even if the first rolling roller 110 is worn, the non-coated portion 22 can be rolled using the second rolling roller 120. Furthermore, the electrode rolling apparatus 100 shown in FIGS. 3 and 4 above can have an equivalent rolling effect of the non-coated portion 22.

Although FIGS. 3 and 4 show that the first end portion 112 and the second end portion 122 are located at the boundary of the insulating coating portion 23 and the non-insulating coating portion 24 of the electrode 20, this does not indicate that the first rolling roller 110 and the second rolling roller 120 roll the non-coated portion 22 of the electrode 20 simultaneously, but rather that each of the first rolling roller 110 and the second rolling roller 120 rolls the non-coated portion 22 of the electrode 20.

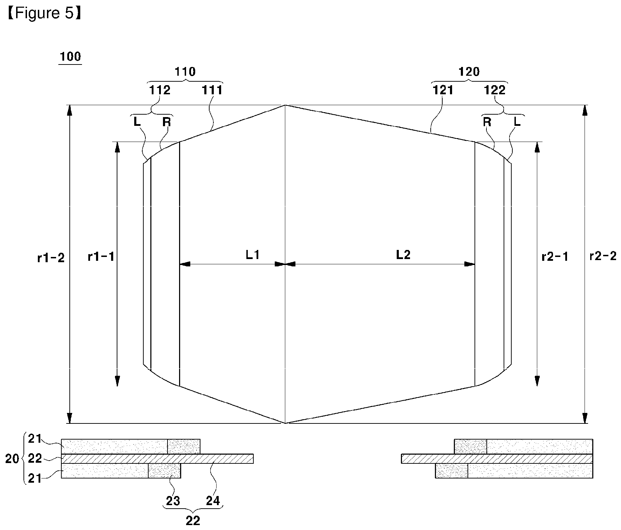

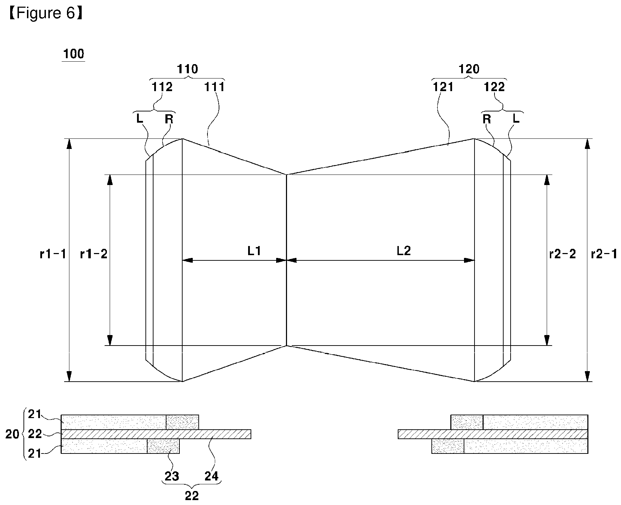

FIGS. 5 and 6 illustrate an electrode rolling apparatus 100 according to one embodiment of the present invention.

Referring to FIG. 5, the first-first outer diameter (r1-1) may be smaller than the first-second outer diameter (r1-2) whereas the second-first outer diameter (r2-1) may be smaller than the second-second outer diameter (r2-2). Further, the length L1 of the first center portion may be different from the length L2 of the second center portion, and the first-first outer diameter (r1-1) and the second-first outer diameter (r2-1) may be the same as each other.

Referring to FIG. 6, the first-first outer diameter (r1-1) may be larger than the first-second outer diameter (r1-2) whereas the second-first outer diameter (r2-1) may be larger than the second-second outer diameter (r2-2). Further, the length L1 of the first center portion may be different from the length L2 of the second center portion, and the first-first outer diameter (r1-1) and the second-first outer diameter (r2-1) may be the same as each other.

That is, the electrode rolling apparatus 100 shown in FIGS. 5 and 6 may have a configuration in which the first rolling roller 110 and the second rolling roller 120 are asymmetrical.

The electrode rolling apparatus 100 shown in FIGS. 5 and 6 according to one embodiment of the present invention has a configuration in which the first rolling roller 110 and the second rolling roller 120 are asymmetrical, so that it can preferably be used for rolling electrodes having different widths of the upper and lower surfaces of the non-coated portion 22. In other words, both the first rolling roller 110 and the second rolling roller 120 of the electrode rolling apparatus 100 shown in FIGS. 5 and 6 can be used for rolling the non-coated portion 22 of the electrode 20.

The electrode rolling apparatus 100 in FIGS. 5 and 6 illustrates that the length L1 of the first center portion is shorter than the length L2 of the second center portion. Also, FIGS. 5 and 6 illustrate that the top surface (tab) of the non-coated portion 22 is narrower than the bottom surface. Therefore, the top surface (tab) of the narrower non-coated portion 22 can be located on the first rolling roller 110, and the bottom surface (bottom) of the wider non-coated portion 22 can be located on the second rolling roller 120.

In other words, the electrode rolling apparatus 100 according to one embodiment of the present invention is capable of selecting a rolling roller that can roll according to the shape of the electrode 20, so that both the first rolling roller 110 and the second rolling roller 120 can be used for rolling the electrode 20.

Although FIGS. 5 and 6 show that the first end portion 112 and the second end portion 122 are located at the boundary of the insulating coating portion 23 and the non-insulating coating portion 24 of the electrode 20, this does not indicate that the first rolling roller 110 and the second rolling roller 120 roll the non-coated portion 22 of the electrode 20 simultaneously, but rather, that each of the first rolling roller 110 and the second rolling roller 120 rolls the non-coated portion 22 of the electrode 20.

The insulating coating portion 23 may comprise at least one type selected from a group consisting of an insulating polymer material and an insulating ceramic material. The insulating polymer material may include at least one type selected from a group consisting of polyvinylidene fluoride, polyimide, polyethylene terephthalate, polyurethane, polyacrylate, epoxy, and silicone, although the type is not particularly limited thereto and those used in the industry may be utilized therefor. The insulating ceramic material may comprise a mixture of at least one type selected from a group consisting of aluminum oxide, silicon oxide, silicon nitride, iron oxide, and glass with an insulating polymer, although the type is not particularly limited thereto and those used in the industry may be utilized therefor.

The first rolling roller 110 and second rolling roller 120 may be made of the same or different materials, and the materials may be metals or polymers. The metal may comprise at least one oxide selected from a group consisting of aluminum, tin and zinc, and may preferably comprise aluminum. The polymer may comprise at least one species selected from a group consisting of polyetheretherketone, polyolefin resin, polyethylene terephthalate, polybutylene terephthalate, polyacetal, polyamide, polycarbonate, polyimide, polyethersulfone, polyphenylene oxide, polyphenylene sulfide, and polyethylene naphthalene, and may preferably comprise polyetheretherketone.

If the first rolling roller 110 and the second rolling roller 120 are made of the same material, the first rolling roller 110 and the second rolling roller 120 may be integrally formed.

Depending on the type of the material forming the insulating coating portion 23, the material of the first rolling roller 110 and the second rolling roller 120 can be determined. In one embodiment, if the material forming the insulating coating portion 23 is an insulating ceramic material, the material of the first rolling roller 110 or the second rolling roller 120 that rolls the non-coated portion 22 of the electrode 20 may be a polymer. If the material is metal, both the ceramic and the metal have high strength, which can lead to rapid wear of the first end portion 112 or the second end portion 122 of the metal material in contact with the ceramic. In another embodiment, if the material forming the insulating coating portion 23 is an insulating polymer material, the material of the first rolling roller 110 or the second rolling roller 120 that rolls the non-coated portion 22 of the electrode 20 may be metal. If the material is a polymer, both the insulating polymer material and the polymer may have low strength, and the rolling of the non-coated portion 22 may not be performed properly.

Furthermore, the electrode rolling apparatus 100 may have alternating grooves and protrusions formed on the peripheral surface of at least one of the first center portion 111, the first end portion 112, the second center portion 121, and the second end portion 122 for forming a plurality of corrugations parallel to the non-coated portion 22, from the coated portion 21 toward the end of the non-coated portion 22. The grooves and protrusions may be triangular-like or semicircular-like in cross-section.

The electrode rolling apparatus 100 of the present invention can not only roll the non-coated portion 22 of the electrode 20 with the first rolling roller 110, but can also roll the non-coated portion 22 with the second rolling roller 120. Thus, an economical effect can be achieved. Furthermore, even if the shape and material of the electrode 20 is different, such as the widthwise length of the non-coated portion 22 and the type of material forming the insulating coating portion 23, the material of the first rolling roller 110 and the second rolling roller 120, and the ratio of the first-second outer diameter (r1 - 2) with respect to the first-first outer diameter (r1-1), the ratio of the second-second outer diameter (r2-2) with respect to the second-first outer diameter (r2-1), or the length ratio (L1/L2) of the first center portion and the second center portion, etc., can be changed to achieve a rolling effect of the non-coated portion 22 equivalent to the coated portion 21.

Further, the first rolling roller 110 and the second rolling roller 120 of the present invention collectively constitute a press roll, which may include a press roll fixture (not shown) that rotatably fixes the press roll.

While preferred embodiments of the present invention have been described in detail above, the scope of the present invention is not limited thereto, and various modifications and improvements by those skilled in the art utilizing the basic concepts of the present invention as defined in the following claims are also within the scope of the present invention.

### [Explanation of symbols]

10: rolling roll
11: center portion
20: electrode
21: coated portion
22: non-coated portion
23: insulating coating portion
24: non-insulating coating portion
100: electrode rolling apparatus
110: first rolling roller
111: first center portion
12, 112: first end portion
120: second rolling roller
121: second center portion
13, 122: second end portion
r1: first outer diameter
r2: second outer diameter
r1-1: first-first outer diameter
r1-2: first-second outer diameter
r2-1: second-first outer diameter
r2-2: second-second outer diameter
L1: Length of the first center portion
L2: Length of the second center portion

## Claims

1. An electrode rolling apparatus for applying pressure to a non-coated portion of an electrode comprising a coated portion coated with an electrode active material and a non-coated portion not coated with an electrode active material, the non-coated portion comprising an insulating coating portion and a non-insulating coating portion, the electrode rolling apparatus comprising:
a first rolling roller; and
a second rolling roller,
wherein the first rolling roller includes a first center portion and a first end portion located at one end of the first center portion in a longitudinal direction,
wherein the second rolling roller includes a second center portion and a second end portion located at one end of the second center portion in the longitudinal direction,
wherein other end surface of the first center portion and other end surface of the second center portion are in contact with each other,
wherein a first-first outer diameter of the first center portion connected to the first end portion is different from a first-second outer diameter of the first center portion abutting the other end surface of the second center portion,
wherein a second-first outer diameter of the second center portion connected to the second end portion is different from a second-second outer diameter of the second center portion abutting the other end surface of the first center portion, and
wherein the first-second outer diameter and second-second outer diameter are the same, and wherein the first end portion or second end portion is adjacent to a boundary of the insulating coating portion and the non-insulating coating portion.

2. The electrode rolling apparatus of claim 1, wherein the first-first outer diameter is smaller than the first-second outer diameter and the second-first outer diameter is smaller than the second-second outer diameter, or wherein the first-first outer diameter is larger than the first-second outer diameter and the second-first outer diameter is larger than the second-second outer diameter.

3. The electrode rolling apparatus of claim 2, wherein a length of the first center portion and a length of the second center portion are the same or different from each other.

4. The electrode rolling apparatus of claim 3, wherein the length of the first center portion and the length of the second center portion are the same, and the first-first outer diameter and the second-first outer diameter are the same or different from each other.

5. The electrode rolling apparatus of claim 3, wherein the length of the first center portion and the length of the second center portion are different from each other, and the first-first outer diameter and the second-first outer diameter are the same or different from each other.

6. The electrode rolling apparatus of claim 3, wherein a length ratio of the first center portion and the second center portion is between 3:5 and 5:3.

7. The electrode rolling apparatus of claim 1, wherein the first-second outer diameter with respect to the first-first outer diameter is 0.8 to 0.99 times or 1.01 to 1.2 times, and the second-second outer diameter with respect to the second-first outer diameter is 0.8 to 0.99 times or 1.01 to 1.2 times.

8. The electrode rolling apparatus of claim 1, wherein the first end portion is tapered in shape with a gradually decreasing outer diameter from the first center portion toward an end thereof, and the second end portion is tapered in shape with a gradually decreasing outer diameter from the second center portion toward an end thereof.

9. The electrode rolling apparatus of claim 8, wherein each of tapered surfaces of the first end portion and the second end portion includes a curved tapered surface and a linear tapered surface extending from the curved tapered surface.

10. The electrode rolling apparatus of claim 8, wherein the first end portion and the second end portion have same or different taper angles.

11. The electrode rolling apparatus of claim 10, wherein the taper angles of the first end portion and the second end portion are from 20 to 30 degrees.

12. The electrode rolling apparatus of claim 1, wherein the first rolling roller and the second rolling roller are made of the same or different materials, the materials being metals or polymers.

13. The electrode rolling apparatus of claim 1, wherein the insulating coating portion comprises at least one type selected from a group consisting of an insulating polymer material and an insulating ceramic material.

14. The electrode rolling apparatus of claim 1, wherein the first rolling roller or the second rolling roller is made of metal, and the insulating coating portion comprises an insulating polymer material.

15. The electrode rolling apparatus of claim 1, wherein a material of the first rolling roller or second rolling roller is a polymer, and the insulating coating portion comprises an insulating ceramic material.

16. The electrode rolling apparatus of claim 1, wherein an outer peripheral surface of at least one of the first center portion, the first end portion, the second center portion, and the second end portion is formed with alternating grooves and protrusions for forming a plurality of corrugations in the non-coated portion thereof, parallel to each other from the coated portion toward an end of the non-coated portion.

17. The electrode rolling apparatus of claim 16, wherein each of the grooves and protrusions has a triangle-like shape or a semicircle-like shape in cross-section.
